(19) Europäisches Patentamt
European Patent Office
Office européen des brevets

(11) **EP 3 625 758 B1**

(12) **FASCICULE DE BREVET EUROPEEN**

(45) Date de publication et mention de la délivrance du brevet:
**05.07.2023 Bulletin 2023/27**

(21) Numéro de dépôt: **18721404.4**

(22) Date de dépôt: **09.05.2018**

(51) Classification Internationale des Brevets (IPC):
**G06T 5/00** (2006.01)

(52) Classification Coopérative des Brevets (CPC):
**G06T 5/001;** G06T 2207/10032

(86) Numéro de dépôt international:
**PCT/EP2018/061950**

(87) Numéro de publication internationale:
**WO 2018/210647 (22.11.2018 Gazette 2018/47)**

(54) **PROCÉDÉ DE TRAITEMENT D'UNE IMAGE OPTIQUE ACQUISE EN PRÉSENCE D'AÉROSOLS ET/OU DE NUAGES DANS L'ATMOSPHÈRE**

VERFAHREN ZUR VERARBEITUNG EINES IN ANWESENHEIT VON AEROSOLEN UND/ODER WOLKEN IN DER ATMOSPHÄRE AUFGENOMMENEN OPTISCHEN BILDES

METHOD FOR PROCESSING AN OPTICAL IMAGE ACQUIRED IN THE PRESENCE OF AEROSOLS AND/OR CLOUDS IN THE ATMOSPHERE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **15.05.2017 FR 1754234**

(43) Date de publication de la demande:
**25.03.2020 Bulletin 2020/13**

(73) Titulaire: **Airbus Defence and Space SAS**
**31402 Toulouse Cedex 4 (FR)**

(72) Inventeur: **POILV , Herv**
**31320 Pechabou (FR)**

(74) Mandataire: **Ipside**
**6, Impasse Michel Labrousse**
**31100 Toulouse (FR)**

(56) Documents cités:
• **HASSAN OUAIDRARI ET AL: "Operational Atmospheric Correction of Landsat TM Data", REMOTE SENSING OF ENVIRONMENT., vol. 70, no. 1, 1 octobre 1999 (1999-10-01), pages 4-15, XP055425860, XX ISSN: 0034-4257, DOI: 10.1016/S0034-4257(99)00054-1**
• **R. RICHTER: "Correction of atmospheric and topographic effects for high spatial resolution satellite imagery", INTERNATIONAL JOURNAL OF REMOTE SENSING, vol. 18, no. 5, 1 mars 1997 (1997-03-01), pages 1099-1111, XP055425835, GB ISSN: 0143-1161, DOI: 10.1080/014311697218593**
• **Olivier Hagolle ET AL: "A Multi-Temporal and Multi-Spectral Method to Estimate Aerosol Optical Thickness over Land, for the Atmospheric Correction of FormoSat-2, LandSat, VEN[mu]S and Sentinel-2 Images", Remote Sensing, vol. 7, no. 3, 1 January 2015 (2015-01-01) , pages 2668-2691, XP055761205, CH ISSN: 2072-4292, DOI: 10.3390/rs70302668**

**Description**

## DOMAINE TECHNIQUE

La présente invention appartient au domaine des images optiques acquises par un instrument d'observation optique embarqué à bord d'un engin spatial, tel qu'un satellite, ou d'un engin aérien évoluant à haute altitude, et concerne plus particulièrement un procédé de traitement d'une image en vue de corriger les effets liés à la présence d'aérosols et/ou de nuages, lors de l'acquisition de ladite image, dans l'atmosphère entre l'engin spatial ou aérien et la scène observée représentée par ladite image.

## ÉTAT DE LA TECHNIQUE

En effet, il est connu que la présence d'aérosols (brouillard, sable, etc.) ou de nuages peu épais au-dessus d'une scène observée depuis un satellite se traduit, dans des images mesurant le rayonnement reçu de la scène dans des bandes de longueurs d'ondes notamment optiques, par la présence d'un voile qui modifie la perception de ladite scène. La présence d'aérosols ou de nuages entraîne également un effet dit d'environnement (« adjacency effect » dans la littérature anglo-saxonne) qui se traduit par une image floutée du fait de la diffusion du rayonnement sur les particules présentes dans l'atmosphère.

Il est donc souhaitable de pouvoir traiter de telles images afin d'essayer de supprimer en tout ou partie ledit voile et l'effet d'environnement.

Il va de soi que cela est tout particulièrement intéressant dans les régions de la Terre qui souffrent de conditions atmosphériques difficiles, comme par exemple des régions tropicales qui, lorsqu'elles ne sont pas entièrement recouvertes par des nuages lors de la saison des pluies, sont fréquemment affectées par des brumes lors de la saison sèche. Ce type de traitement est applicable de manière plus générale dans toute région de la Terre, notamment lorsqu'il s'agit de produire des images mosaïques de zones de grandes dimensions à partir de plusieurs images, pour pouvoir exploiter des images de qualité moindre et ainsi accélérer la finalisation de l'image mosaïque.

De tels traitements visant à supprimer les effets liés à la présence de d'aérosols et/ou de nuages sont utiles non seulement pour améliorer le rendu visuel d'une image, mais également pour fournir une représentation plus robuste et normalisée qui permet in fine d'améliorer l'efficacité d'éventuels traitements ultérieurs, comme par exemple une classification de la scène, etc.

En outre, il est souhaitable de pouvoir effectuer ces traitements de manière autonome, c'est-à-dire sans avoir besoin d'informations externes sur les conditions atmosphériques dans lesquelles une image a été acquise et sans avoir à faire appel à une autre image représentant la même scène.

Afin de corriger les effets de l'atmosphère sur une image acquise par un satellite, il est connu notamment de rechercher les pixels les plus sombres de l'image, et de supposer que ces pixels représentent des objets noirs dans la scène (approche dite « dark prior » dans la littérature anglo-saxonne). Ces pixels sont alors utilisés pour caractériser le voile présent dans l'image et le supprimer. Une telle approche est par exemple décrite dans l'article scientifique : « Single Image Haze Removal Using Dark Channel Prior », Kaiming He, Jian Sun, Xiaoou Tang, CVPR 2009.

Toutefois, la détection automatique de pixels noirs est parfois compliquée et, surtout, de tels pixels n'existent pas toujours dans une image. Une alternative consiste à utiliser des objets de référence dans la scène, dont la réflectance est connue a priori, et de les utiliser pour caractériser le voile présent dans l'image. Cependant, il n'est pas toujours possible d'avoir de tels objets de référence dans une scène, et leur détection peut en outre être rendue difficile par la présence d'aérosols et/ou de nuages dans l'atmosphère.

Il est également connu de la demande internationale WO 2014/197021 de combiner l'approche précédente avec un modèle atmosphérique modélisant la propagation dans l'atmosphère en présence d'aérosols. Le modèle atmosphérique utilisé est de type LOWTRAN. Le procédé décrit recherche automatiquement les pixels sombres dans l'image et estime de manière itérative l'épaisseur optique des aérosols (« aerosol optical depth » ou AOD dans la littérature anglo-saxonne). En supposant que les pixels sombres correspondent à des objets noirs, le procédé estime l'épaisseur optique des aérosols en tenant compte de l'effet d'environnement.

Toutefois, l'hypothèse de présence d'un objet noir n'est pas toujours vérifiée, de sorte que le traitement appliqué n'est pas toujours efficace. En outre, le procédé décrit ne permet pas de distinguer les aérosols des nuages, alors que ceux-ci produisent des effets différents. D'une part, les effets des aérosols sont très marqués dans les longueurs d'ondes bleues alors que les effets des nuages sont relativement achromatiques. En outre, les aérosols et les nuages produisent des effets d'environnement différents du fait qu'ils se situent à des altitudes différentes et ont des comportements de diffusion différents.

D'autres méthodes de corrections atmosphériques prenant en compte les effets liés à la présence des aérosols et des nuages sont divulguées dans le document "Operational Atmospheric Correction of Landsat TM Data", Hassan Ouaidrari et al., Remote Sensing of Environment, vol. 70, no. 1, p. 4-15 ainsi que dans le document "Correction of atmospheric and topographie effects for high spatial resolution satellite imagery", International Journal of Remote Sensing, vol. 18, no. 5, p. 1099-1111 et dans le document "A Multi-Temporal and Multi-Spectral Method to Estimate Aérosol Optical Thickness over Land, for the Atmospheric Correction of FormoSat-2, LandSat, VEN$\mu$S and Sentinel-2 Images", Remote Sensing, vol. 7, no. 3, p. 2668-2691.

## EXPOSÉ DE L'INVENTION

La présente invention a pour objectif de remédier à tout ou partie des limitations des solutions de l'art antérieur, notamment celles exposées ci-avant, en proposant une solution qui permette de supprimer en tout ou partie les effets liés à la présence d'aérosols et/ou de nuages (non opaques) dans une image acquise par un instrument d'observation optique embarqué à bord d'un engin spatial, tel qu'un satellite, ou d'un engin aérien évoluant à haute altitude.

En outre, la présente invention vise à proposer une solution qui permette d'effectuer de tels traitements de manière autonome, c'est-à-dire sans avoir à recevoir d'informations a priori sur les conditions atmosphériques dans lesquelles l'image a été acquise et sans avoir à faire appel à une autre image représentant la même scène acquise à une date antérieure.

A cet effet, et selon un premier aspect, l'invention concerne un procédé de traitement d'une image optique acquise par un engin spatial ou aérien, ladite image représentant un rayonnement dans au moins une bande de longueurs d'ondes reçu d'une scène à la surface de la Terre, comportant :

- une obtention d'un modèle de réflectance de la scène et d'un modèle atmosphérique, ledit modèle atmosphérique comportant au moins un modèle d'aérosols et un modèle de nuages modélisant les effets de l'atmosphère dans des couches respectives d'altitudes respectives différentes,
- une détermination de valeurs optimales de paramètres du modèle atmosphérique permettant d'optimiser ledit modèle atmosphérique par rapport à l'image,
- une détermination de valeurs de paramètres de correction pour chaque couche du modèle atmosphérique en fonction des valeurs optimales des paramètres du modèle atmosphérique,
- une conversion de l'image en une image au sol avec effets d'environnement en fonction des valeurs des paramètres de correction de chaque couche du modèle atmosphérique,
- une conversion de l'image au sol avec effets d'environnement en image au sol sans effets d'environnement en fonction des valeurs des paramètres de correction de chaque couche du modèle atmosphérique.

Ainsi, le procédé de traitement d'image utilise un modèle de réflectance au sol qui modélise la réflectance intrinsèque de la scène observée, et ne nécessite pas de détecter de pixels sombres dans l'image et de supposer que ceux-ci représentent des objets noirs de la scène.

En outre, le procédé de traitement d'image utilise un modèle atmosphérique qui est un modèle multicouche comportant au moins deux couches d'altitudes respectives différentes, à savoir une couche modélisée par un modèle d'aérosols qui restitue les effets des aérosols et, au-dessus, une couche modélisée par un modèle de nuages qui restitue les effets des nuages.

Par conséquent, les effets des aérosols d'une part et les effets des nuages d'autre part sont modélisés par deux modèles différents, en prenant en compte les altitudes respectives auxquelles se trouvent les aérosols (par exemple entre 0 et environ 2 kilomètres) et les nuages (par exemple entre environ 2 kilomètres et environ 4 kilomètres) dans l'atmosphère. Il en résulte que les effets respectifs des aérosols et des nuages peuvent être mieux estimés et corrigés dans l'image acquise par l'engin spatial ou aérien.

Le procédé de traitement comporte alors une conversion de l'image en image au sol avec effets d'environnement, c'est-à-dire en image au sol dans laquelle les effets d'environnement n'ont pas encore été corrigés, et une conversion de ladite image au sol avec effets d'environnement en image au sol sans effets d'environnement, c'est-à-dire en image au sol dans laquelle les effets d'environnement ont été corrigés.

Dans des modes particuliers de mise en oeuvre, le procédé de traitement d'image peut comporter en outre l'une ou plusieurs des caractéristiques suivantes, prises isolément ou selon toutes les combinaisons techniquement possibles.

Dans des modes particuliers de mise en oeuvre, les paramètres de correction comportent des réflectances intrinsèques et des atténuations intrinsèques de chaque couche du modèle atmosphérique, et la conversion en image au sol avec effets d'environnement comporte une correction de ce réflectances intrinsèques et atténuations intrinsèques des différentes couches du modèle atmosphérique.

Dans des modes particuliers de mise en oeuvre, les paramètres de correction comportent des proportions d'environnement transmis pour chaque couche du modèle atmosphérique, et la conversion en image au sol sans effets d'environnement comporte une correction de contributions d'environnement introduites par les différentes couches en fonction des proportions d'arrièreplan transmis.

Dans des modes particuliers de mise en oeuvre, la correction d'une contribution d'environnement en un pixel pour une couche comporte :

- un calcul d'une réflectance reçue dans un cône de vue dont le sommet correspond au pixel considéré,
- une suppression de ladite réflectance reçue dans le cône de vue, pondérée par la proportion d'effet d'environnement transmis pour la couche considérée et le pixel considéré.

Dans des modes particuliers de mise en oeuvre, le procédé de traitement d'image comportant une identification de pixels de l'image pour lesquels un critère d'opacité de la couche du modèle de nuages est vérifié, dits « pixels masqués », et la valeur de chaque pixel masqué est forcée, dans l'image au sol sans effets d'environnement, à une valeur prédéterminée.

En effet, en cas de nuage opaque, il n'est pas possible de restituer la scène sous le nuage, de sorte qu'il n'est pas nécessaire de corriger les valeurs de pixels représentant la scène masquée sous le nuage.

Dans des modes particuliers de mise en oeuvre, la valeur prédéterminée correspond à la valeur du pixel masqué dans l'image après conversion en valeur en sommet de nuage (« top of cloud » dans la littérature anglo-saxonne) ou en valeur en sommet d'atmosphère (« top of atmosphère » dans la littérature anglo-saxonne).

Dans des modes particuliers de mise en oeuvre, la détermination de valeurs optimales de paramètres du modèle atmosphérique comporte une détermination, pour chaque paramètre, d'une carte de valeurs optimales dudit paramètre associées respectivement à différents pixels de l'image, et un filtrage spatial de ladite carte de valeurs optimales dudit paramètre.

Dans des modes particuliers de mise en oeuvre, pour chaque paramètre, la détermination d'une carte de valeurs optimales dudit paramètre comporte en outre une détermination d'une carte de valeurs de confiance associées aux valeurs optimales, et le filtrage spatial d'une carte de valeurs optimales est effectué en fonction de la carte de valeurs de confiance associée.

Dans des modes particuliers de mise en oeuvre, le filtrage spatial d'une carte de valeurs optimales comporte un calcul de cartes de valeurs optimales à résolution dégradée pour différentes valeurs de dégradation de résolution, en fonction de la carte de valeurs optimales et de la carte de valeurs de confiance associée, et un calcul d'une moyenne pondérée de la carte de valeurs optimale et des cartes de valeurs optimales à résolution dégradée.

Dans des modes particuliers de mise en oeuvre, l'image correspond à une image brute dont les valeurs des pixels ont été converties en valeurs en sommet d'atmosphère.

Dans des modes particuliers de mise en oeuvre, l'image correspond à une image haute résolution dont la résolution a été dégradée, comportant une détermination de facteurs de correction à appliquer à l'image pour obtenir l'image au sol sans effets d'environnement, et une conversion de l'image haute résolution en une image haute résolution au sol sans effets d'environnement en fonction desdits facteurs de correction.

Dans des modes particuliers de mise en oeuvre, le modèle atmosphérique comporte en outre un modèle de ciel modélisant les effets de l'atmosphère dans une couche d'altitude supérieure à la couche du modèle de nuages.

Dans des modes particuliers de mise en oeuvre, le procédé de traitement comporte une étape préalable de détermination si l'image comporte un nuage, un modèle atmosphérique sans modèle de nuages étant utilisé lorsqu'il est déterminé que l'image ne comporte pas de nuage.

Dans des modes particuliers de mise en oeuvre, au cours de la conversion en image au sol avec effets d'environnement, les effets respectifs de chaque couche du modèle atmosphérique sont corrigés successivement, en considérant lesdites couches successivement par altitudes décroissantes.

Dans des modes particuliers de mise en oeuvre, au cours de la conversion en image au sol sans effets d'environnement, les effets respectifs de chaque couche du modèle atmosphérique sont corrigés successivement, en considérant lesdites couches successivement par altitudes décroissantes.

Selon un second aspect, l'invention concerne un produit programme d'ordinateur comportant un ensemble d'instructions de code de programme qui, lorsqu'elles sont exécutées par un processeur, configurent ledit processeur pour mettre en oeuvre un procédé de traitement d'image selon l'un quelconque des modes de mise en oeuvre de l'invention.

Selon un troisième aspect, l'invention concerne un dispositif de traitement d'image acquise par un engin spatial ou aérien comportant des moyens configurés pour mettre en oeuvre un procédé de traitement d'image selon l'un quelconque des modes de mise en oeuvre de l'invention.

## PRÉSENTATION DES FIGURES

L'invention sera mieux comprise à la lecture de la description suivante, donnée à titre d'exemple nullement limitatif, et faite en se référant aux figures qui représentent :

- Figure 1 : une représentation schématique d'un satellite d'observation en orbite terrestre,
- Figure 2 : un diagramme représentant les principales étapes d'un procédé de traitement d'image,
- Figure 3 : un diagramme représentant un mode préféré de mise en oeuvre de procédé de traitement d'image,
- Figure 4 : une représentation schématique des différentes couches d'un exemple de modèle atmosphérique,
- Figure 5 : un diagramme représentant le fonctionnement pyramidal d'un filtrage spatial d'une carte de valeurs optimales d'un paramètre du modèle atmosphérique,
- Figure 6 : un diagramme représentant un exemple de calcul d'une réflectance reçue dans un cône de vue,
- Figure 7 : un diagramme représentant une variante de mise en oeuvre du procédé de traitement d'image de la figure 3.

Dans ces figures, des références identiques d'une figure à une autre désignent des éléments identiques ou analogues. Pour des raisons de clarté, les éléments représentés ne sont pas à l'échelle, sauf mention contraire.

## DESCRIPTION DÉTAILLÉE DE MODES DE RÉALISATION

Dans la suite de la description, on considère de manière non limitative le cas d'un traitement d'images acquises depuis un engin spatial de type satellite. Il convient toutefois de préciser que l'invention est également applicable à des images acquises par un instrument d'observation optique embarqué à bord d'un engin aérien (avion, ballon, drone, etc.) évoluant à une altitude suffisamment élevée pour que ladite image soit exposée aux effets de voile et d'environnement de la colonne atmosphérique sous-jacente.

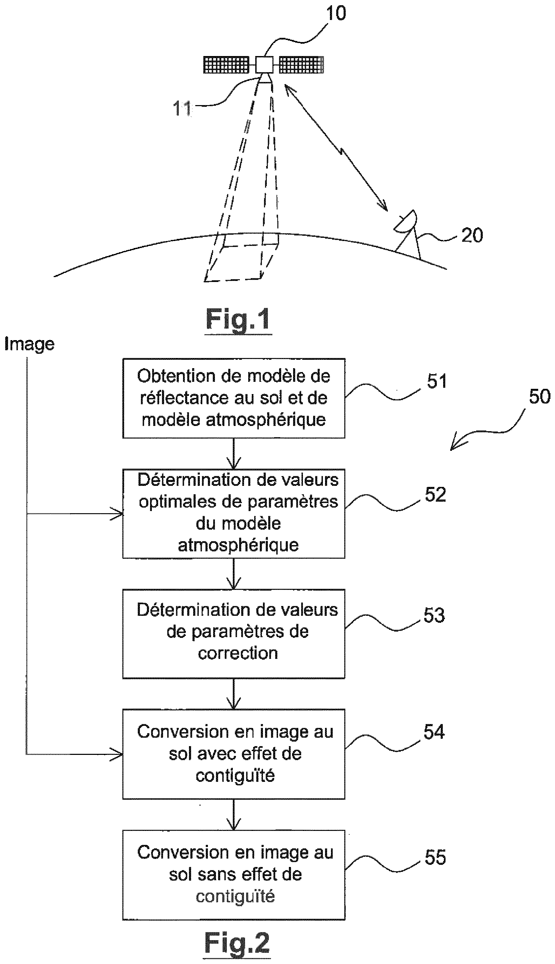

La figure 1 représente schématiquement un satellite 10 en orbite terrestre, configuré pour observer une scène à la surface de la Terre. L'orbite terrestre est par exemple une orbite défilante, de sorte que la scène observée par le satellite varie au cours du temps, du fait au moins du déplacement dudit satellite 10 par rapport à la Terre.

De manière conventionnelle, le satellite 10 embarque au moins un instrument d'observation 11 optique qui permet d'acquérir une image correspondant au rayonnement reçu dans une bande de longueurs d'ondes. La bande de longueurs d'ondes d'acquisition de l'image se trouve dans le domaine des longueurs d'ondes optiques qui correspond au domaine des longueurs d'ondes visibles et infrarouges, notamment proche infrarouge (« Near Infrared » ou NIR) ou infrarouge à courte longueur d'onde (« Short Wavelength Infrared » ou SWIR).

Généralement, le ou les instruments d'observation 11 embarqués par le satellite 10 comportent un ensemble de détecteurs sensibles dans des bandes de longueurs d'ondes respectives différentes. L'image acquise d'une scène est alors multi-spectrale ou hyper-spectrale (si le nombre de bandes de longueurs d'ondes est important) et comporte alors plusieurs images élémentaires de la scène acquises dans des bandes de longueurs d'ondes respectives différentes. Par exemple, il est possible d'avoir à la fois :

- une image élémentaire dans la bande des longueurs d'ondes bleues (par exemple [450-520] nanomètres),
- une image élémentaire dans la bande des longueurs d'ondes vertes (par exemple [530-590] nanomètres),
- une image élémentaire dans la bande des longueurs d'ondes rouges (par exemple [625-695] nanomètres).
- une image élémentaire dans la bande des longueurs d'ondes proche infrarouge (par exemple [760-890] nanomètres).

L'instrument d'observation 11 peut également, suivant d'autres exemples, être un instrument panchromatique et acquérir directement une image dans une bande de longueurs d'ondes large, qui couvre par exemple directement toutes les longueurs d'ondes visibles.

La présente invention est applicable à une image au sens large, c'est-à-dire qu'elle est applicable sur une image (élémentaire) unique acquise dans une seule bande de longueurs d'ondes large ou étroite. Toutefois, la présente invention trouve une application particulièrement avantageuse dans le cas d'une image qui est multi-spectrale ou hyper-spectrale, c'est-à-dire dans le cas d'une image d'une scène constituée d'une pluralité d'images élémentaires de la scène acquises dans des bandes de longueurs d'ondes respectives différentes.

Une fois une image acquise par le ou les instruments d'observation 11 du satellite 10, ladite image est mémorisée pour être transmise à une station sol 20, lorsque le satellite 10 survole ladite station sol 20. Une fois transmise à une station sol 20, l'image est ensuite fournie à un dispositif de traitement (non représenté sur les figures) qui peut effectuer en temps différé les traitements visant à corriger dans l'image les effets de la présence d'aérosols et/ou de nuages dans l'atmosphère lors de l'acquisition de l'image, en mettant en oeuvre un procédé 50 de traitement d'image.

Le dispositif de traitement comporte par exemple un circuit de traitement comportant un ou plusieurs processeurs et des moyens de mémorisation (disque dur magnétique, mémoire électronique, disque optique, etc.) dans lesquels sont mémorisés des données et un produit programme d'ordinateur, sous la forme d'un ensemble d'instructions de code de programme à exécuter pour mettre en oeuvre tout ou partie des étapes du procédé 50 de traitement d'image. Alternativement ou en complément, le circuit de traitement comporte un ou des circuits logiques programmables (FPGA, PLD, etc.), et/ou un ou des circuits intégrés spécialisés (ASIC), et/ou un ensemble de composants électroniques discrets, etc. adaptés à mettre en oeuvre tout ou partie des étapes du procédé 50 de traitement d'image.

En d'autres termes, le circuit de traitement correspond à un ensemble de moyens configurés de façon logicielle (produit programme d'ordinateur spécifique) et/ou matérielle (FPGA, PLD, ASIC, etc.) pour mettre en oeuvre les différentes étapes du procédé 50 de traitement d'image.

La figure 2 représente schématiquement les principales étapes d'un procédé 50 de traitement d'image visant à corriger les effets de la présence d'aérosols et/ou de nuages dans l'image acquise d'une scène. Tel qu'illustré par la figure 2, le procédé 50 de traitement d'image comporte des étapes de :

- 51 obtention d'un modèle de réflectance au sol et d'un modèle atmosphérique modélisant les effets de l'atmosphère entre la scène et le satellite 10, ledit modèle atmosphérique comportant au moins un modèle d'aérosols et un modèle de nuages modélisant les effets de l'atmosphère dans des couches respectives d'altitudes respectives différentes,
- 52 détermination de valeurs optimales de paramètres du modèle atmosphérique permettant d'optimiser ledit modèle atmosphérique par rapport à l'image,
- 53 détermination de valeurs de paramètres de correction pour chaque couche du modèle atmosphérique en fonction des valeurs optimales des paramètres du modèle atmosphérique,
- 54 conversion de l'image en une image au sol avec effets d'environnement en fonction des valeurs des paramètres de correction de chaque couche du modèle atmosphérique,
- 55 conversion de l'image au sol avec effets d'environnement en image au sol sans effets d'environnement en fonction des valeurs des paramètres de correction de chaque couche du modèle atmosphérique.

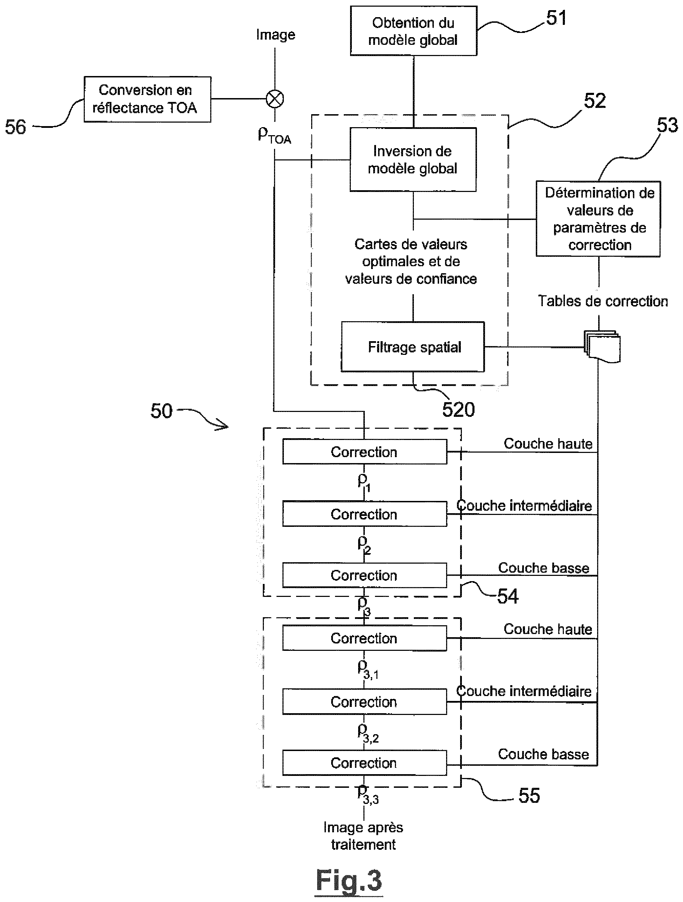

Des exemples de mise en oeuvre des étapes ci-dessus sont décrits plus en détail ci-après, en référence notamment à la figure 3 qui représente un mode préféré de mise en oeuvre du procédé 50 de traitement d'image.

Dans l'exemple non limitatif illustré par la figure 3, le procédé 50 de traitement d'image comporte en outre une étape 56 de conversion des valeurs de pixels de l'image en valeurs en sommet d'atmosphère, dites valeurs de réflectance TOA (« Top of Atmosphère » dans la littérature anglo-saxonne). Une telle conversion vise donc à obtenir une image d'une valeur physique de réflectance telle qu'on peut la mesurer dans l'espace à l'extérieur de l'enveloppe atmosphérique de la Terre.

A) Obtention de modèle de réflectance au sol et de modèle atmosphérique

Tel qu'indiqué ci-dessus, la procédé 50 de traitement d'image utilise un modèle de scène qui comporte principalement deux types de modèles :

- un modèle de réflectance au sol qui modélise la réflectance intrinsèque de la scène observée en fonction de différents paramètres, et
- un modèle atmosphérique qui modélise la fonction de transfert de l'atmosphère entre la scène et le satellite 10, et plus particulièrement entre la scène et le sommet de l'atmosphère, en fonction de différents paramètres.

A.1) Modèle de réflectance au sol

Le modèle de réflectance au sol est par exemple basé sur un modèle SAIL/PROSPECT, qui modélise notamment la réflectance de scènes correspondant à des couverts de végétation, la végétation étant le contributeur principal dans la majorité des scènes observées depuis un satellite 10.

Le modèle SAIL/PROSPECT, également connu sous le nom de modèle PROSAIL dans la littérature scientifique, prend en compte, de manière conventionnelle, la direction d'illumination de la scène par le Soleil ainsi que la direction de visée de l'instrument (modèle BRDF pour « Bidirectional Réflectance Distribution Fonction »).

Le modèle SAIL/PROSPECT a été validé de manière exhaustive et est couramment utilisé par la communauté scientifique. On peut citer à titre d'exemple la publication scientifique : « PROSPECT + SAIL Models : A Review of Use for Végétation Characterization », Jacquemoud S., Verhoef W., Baret W., Bacour C., Zarco-Tejada P.J., Asner G.P., François C., Ustin, S.L., Remote Sensing of Environment 113, S56-S66.

Il est également possible d'enrichir le modèle de réflectance au sol au moyen par exemple :

- d'une connaissance a priori du couvert observé et d'une gamme prédéterminée de densité de végétation (allant par exemple de forêt tropicale à région semi-aride),
- d'une composante d'eau, qui met par exemple en oeuvre un modèle de transfert radiatif utilisant le même formalisme que le modèle SAIL et les propriétés optiques de l'eau telles que caractérisées dans des eaux potentiellement peu profondes et turbides, dites de type CASE II (voir par exemple « Variations in the Light Absorption Coefficients of Phytoplankton, Nonalgal Particles, and Dissolved Organic Matter in Coastal Waters Around Europe », Babin et al., Journal of Geophysical Research, 108, 3211) s'il est connu a priori qu'une forte présence d'eau est possible dans la scène observée (par exemple zone côtière, lacs, etc.),

- d'une réponse spectrale du sol prédéterminée, sélectionnée en fonction d'une connaissance a priori du type sol observé dans la scène lorsque la contribution du sol est susceptible d'être importante par rapport à la contribution du couvert végétal (montagne, désert, etc.),
- d'une modélisation d'autres caractéristiques susceptibles d'influencer la réflectance de la scène observée, comme par exemple une présence importante de zones brulées, de zones enneigées, de surfaces artificielles présentant une signature spectrale prédéterminée, etc.

A.2) Modèle atmosphérique

Le modèle atmosphérique est par exemple basé sur un modèle LOWTRAN (voir par exemple « Users Guide to LOWTRAN 7 », Kneisys F.X. et al., 1988, Air Force Geophysics Lab Hanscom AFB MA).

Tel qu'indiqué ci-dessus, le modèle atmosphérique est un modèle multicouche comportant au moins deux couches d'altitudes respectives différentes, à savoir une couche modélisée par un modèle d'aérosols qui modélise les effets des aérosols et, au-dessus, une couche modélisée par un modèle de nuages qui modélise les effets des nuages.

Dans la suite de la description, on se place de manière non limitative dans le cas où le modèle atmosphérique comporte en outre un modèle de ciel modélisant les effets de l'atmosphère dans une couche d'altitude supérieure à la couche du modèle de nuages.

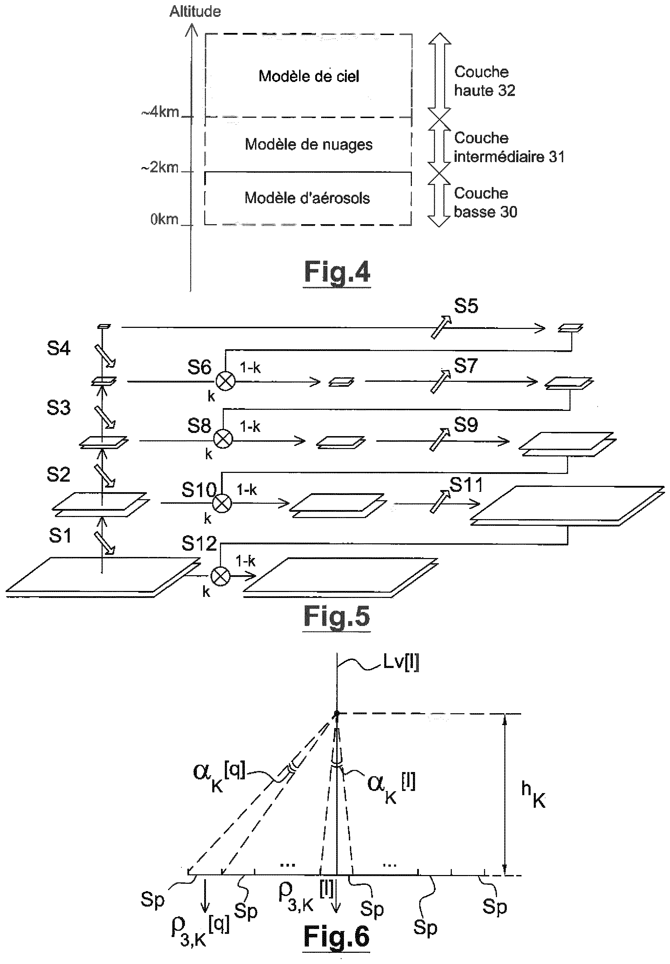

La répartition des différentes couches du modèle atmosphérique est représentée sur la figure 4. Tel qu'illustré par la figure 4, l'atmosphère est modélisée suivant trois couches principales :

- une couche basse 30, qui correspond par exemple aux altitudes comprises entre 0 et environ 2 kilomètres auxquelles se situent les aérosols, et qui est modélisée par le modèle d'aérosols,
- une couche intermédiaire 31, qui correspond par exemple aux altitudes comprises entre environ 2 et environ 4 kilomètres auxquelles peuvent se situer des nuages (à l'exception de certains types de nuages, comme par exemple des cirrus), et qui est modélisée par le modèle de nuages,
- une couche haute 32, au-dessus de la couche intermédiaire 31 et jusqu'au sommet de l'atmosphère, qui introduit principalement une diffusion Rayleigh modélisée par le modèle de ciel.

Le modèle d'aérosols et le modèle de nuages sont par exemple modélisés en tant que couches de milieu trouble (« turbid medium » dans la littérature anglo-saxonne) avec une fonction de phase Henvey-Greenstein et un paramètre d'asymétrie adaptés aux comportements respectifs des aérosols et des nuages. Pour le modèle d'aérosols et le modèle de nuages, les fonctions de transfert sont par exemple exprimées selon le formalisme 4-flux tel que développé dans le modèle SAIL.

Les propriétés optiques de nuages sont bien connues et décrites dans la littérature, et peuvent être utilisées pour paramétrer le modèle de nuages, et pour établir une relation entre l'épaisseur optique d'un nuage et la réflectance apparente dudit nuage, par exemple pour utiliser l'épaisseur optique de nuage comme paramètre du modèle de nuages.

Pour un modèle d'aérosols de type LOWTRAN, le paramètre directeur est généralement la distance de visibilité, en relation avec la charge d'aérosols. Les propriétés optiques des aérosols peuvent être déduites de l'appel du modèle LOWTRAN, par comparaison des résultats fournis par ledit modèle LOWTRAN en considérant d'une part une absence d'aérosols (visibilité maximale) et, d'autre part, un type particulier d'aérosols et une valeur de référence de la distance de visibilité. Ainsi, il est possible d'établir des relations (« look-up tables ») entre le paramètre distance de visibilité du modèle LOWTRAN et l'épaisseur optique de la couche aérosols, et d'utiliser ladite distance de visibilité comme paramètre dudit modèle d'aérosols.

Il est également possible d'enrichir le modèle d'aérosols et/ou le modèle de nuages au moyen par exemple d'un modèle de sable pour les zones géographiques dans lesquelles des particules de sable en quantité non négligeable peuvent être retrouvées dans la couche basse 30 et/ou dans la couche intermédiaire 31.

Le modèle de ciel modélise, de manière conventionnelle, la diffusion Rayleigh introduite par la couche haute 32. L'intensité de la diffusion Rayleigh, en relation avec l'épaisseur optique de la colonne atmosphérique moléculaire, peut être contrôlée de manière conventionnelle par un paramètre équivalent d'altitude. Ce paramètre dépend du relief de la scène, varie modérément selon les conditions de pression et température, et correspond au-dessus des nuages opaques à l'altitude apparente du plafond nuageux. Ce paramètre est désigné ci-après par « altitude plancher de la colonne atmosphérique ».

A.3) Sélection du modèle de scène

Afin de pouvoir traiter des images de scènes situés à des endroits différents à la surface de la Terre, il est possible, dans des modes particuliers de mise en oeuvre, de mémoriser dans une base de données une bibliothèque de modèles de scène. Chaque modèle de scène mémorisé dans cette base de données correspond à une combinaison particulière d'un modèle de réflectance au sol et d'un modèle atmosphérique adaptée à une combinaison particulière de type de paysage et de conditions climatiques.

En classifiant différentes zones à la surface de la Terre en fonction de leurs types de paysage et de leurs conditions climatiques, il est possible d'établir une ou plusieurs cartes géographiques permettant de sélectionner, pour chaque zone à la surface de la Terre, le modèle de scène le plus adapté au type de paysage et aux conditions climatiques rencontrés dans cette zone.

Ainsi, la sélection revient principalement, dans le cas où une bibliothèque globale de modèles de scène a préalablement été constituée dans une base de données, à identifier la zone dans laquelle se trouve la scène observée et à obtenir dans la base de données le modèle de scène associé à ladite zone.

B) Détermination de valeurs optimales de paramètres du modèle de scène

Tel qu'indiqué ci-dessus, le procédé 50 de traitement d'image comporte une étape 52 de détermination de valeurs optimales de paramètres du modèle atmosphérique permettant d'optimiser ledit modèle atmosphérique par rapport à l'image.

Ladite étape 52 de détermination de valeurs optimales de paramètres du modèle atmosphérique s'inscrit dans un processus plus général d'inversion du modèle de scène qui conduit à déterminer également des valeurs optimales de paramètres du modèle de réflectance au sol permettant d'optimiser le modèle de réflectance au sol par rapport à l'image. En d'autres termes, l'étape 52 vise à déterminer des valeurs optimales des paramètres du modèle de réflectance au sol et des valeurs optimales des paramètres respectifs des différentes couches du modèle atmosphérique, permettant d'optimiser le modèle de scène par rapport à l'image. De préférence, le modèle de réflectance au sol et le modèle atmosphérique du modèle de scène sont optimisés conjointement et simultanément.

En effet, un jeu particulier de valeurs des paramètres du modèle de scène permet d'obtenir une image théorique de ladite scène au sommet de l'atmosphère, qui peut être comparée à l'image acquise par le satellite 10.

Par exemple, l'optimisation vise à maximiser la ressemblance entre l'image théorique et l'image acquise par le satellite 10, c'est-à-dire qu'elle vise à déterminer les valeurs dites optimales desdits paramètres qui permettent d'obtenir une ressemblance maximale entre l'image théorique et ladite image acquise par le satellite 10. Toutefois, d'autres types d'optimisation peuvent être considérés et un processus d'optimisation comporte généralement la définition préalable d'une fonction de coût à optimiser, c'est-à-dire à minimiser ou à maximiser suivant le type de fonction de coût. Le choix d'une fonction de coût particulière ne constitue qu'une variante d'implémentation de l'invention.

Par exemple, les paramètres dont les valeurs optimales doivent être déterminées du modèle atmosphérique correspondent à :

- la distance de visibilité pour le modèle d'aérosols,
- l'épaisseur optique de nuage pour le modèle de nuages, et
- l'altitude plancher de la colonne atmosphérique pour le modèle de ciel.

Toutefois, l'invention est également applicable en considérant d'autres types de paramètres, et le choix d'un type particulier de paramètre ne constitue qu'une variante d'implémentation de l'invention. A titre d'exemple, il est également possible de considérer comme paramètre du modèle d'aérosols l'épaisseur optique d'aérosols (AOD).

Il est à noter que plus le nombre de mesures dans le domaine spectral est important, et plus les valeurs optimales déterminées desdits paramètres seront précises et proches de la réalité. A ce titre, l'utilisation d'une image multi-spectrale ou hyper-spectrale, constituée de plusieurs images élémentaires représentant le rayonnement reçu d'une même scène dans des bandes de longueurs d'ondes respectives différentes permet d'augmenter le nombre de mesures et donc d'améliorer les performances de l'inversion du modèle atmosphérique (et, de manière plus générale, du modèle de scène).

A l'issue de l'étape 52 de détermination de valeurs optimales du modèle de scène, on dispose donc par exemple, en chaque pixel de l'image (et, dans le cas d'une image multi-spectrale ou hyper-spectrale, pour chaque image élémentaire) :

- d'une valeur optimale pour la distance de visibilité,
- d'une valeur optimale pour l'épaisseur optique de nuages,
- d'une valeur optimale pour l'altitude plancher de la colonne atmosphérique.

En outre, les méthodes connues d'optimisation permettent également de fournir une valeur confiance associée à chaque valeur optimale déterminée d'un paramètre, représentative de la vraisemblance de ladite valeur optimale compte tenu par exemple des valeurs respectives du pixel correspondant dans l'image théorique et dans l'image acquise par le satellite 10. Ainsi, à l'issue de l'étape 52 de détermination de valeurs optimales du modèle de scène, on peut également disposer, en chaque pixel de l'image (et, dans le cas d'une image multi-spectrale ou hyper-spectrale, pour chaque image élémentaire) :

- d'une valeur de confiance associée à la valeur optimale de la distance de visibilité,
- d'une valeur de confiance associée à la valeur optimale de l'épaisseur optique de nuages,
- d'une valeur de confiance associée à l'altitude plancher de la colonne atmosphérique.

Il est à noter que, pour la couche haute 32, la valeur optimale de l'altitude basse de la colonne atmosphérique est en principe sensiblement la même pour tous les pixels de l'image. Par conséquent, il est possible, pour le modèle de ciel de la couche haute 32, de ne déterminer qu'une seule valeur optimale de l'altitude plancher de la colonne atmosphérique, ou de ne déterminer que quelques valeurs optimales pour quelques pixels de ladite l'image (et, éventuellement, les valeurs de confiance associées).

Il est également à noter que, de manière analogue, des valeurs optimales (et éventuellement des valeurs de confiance associées) peuvent être obtenues pour les paramètres du modèle de réflectance au sol.

Dans des modes particuliers de mise en oeuvre, les valeurs de confiance associées aux valeurs optimales des paramètres du modèle atmosphérique, calculées au cours de l'inversion du modèle de scène, peuvent être pondérées afin de tenir compte de différents critères.

Suivant un premier exemple, il est possible de tenir compte de la valeur optimale de l'épaisseur optique de nuage pour pondérer la valeur de confiance de la valeur optimale de la distance de visibilité de la couche basse 30 du même pixel. En effet, dans le cas d'un nuage épais, la charge d'aérosols sous le nuage ne peut pas être déterminée correctement. Il est donc avantageux, dans le cas où la valeur optimale de l'épaisseur optique de nuage est importante, de réduire la valeur de confiance de la valeur optimale de la distance de visibilité de la couche basse 30 déterminée pour le même pixel.

Suivant un autre exemple, il est possible de tenir compte de valeurs optimales des paramètres du modèle de réflectance au sol pour pondérer les valeurs de confiance des valeurs optimales de la distance de visibilité de la couche basse 30. En effet, la détermination de la charge d'aérosols (et donc de la distance de visibilité) est plus précise au-dessus de zones sombres telles que des forêts. Il est donc avantageux d'augmenter la valeur de confiance de la valeur optimale de la distance de visibilité de la couche basse 30 pour un pixel représentant une zone de végétation dense et sombre de la scène.

A l'issue de l'étape 52 de détermination de valeurs optimales du modèle de scène, on dispose donc de préférence, pour chaque paramètre et pour chaque couche du modèle atmosphérique (et, le cas échéant, pour chaque image élémentaire) :

- d'une carte de valeurs optimales associées respectivement à différents pixels,
- d'une carte de valeurs de confiance associées auxdites valeurs optimales.

Tel qu'indiqué précédemment, pour la couche haute 32, la valeur optimale de l'altitude plancher de la colonne atmosphérique est en principe sensiblement la même pour tous les pixels de l'image. Par conséquent, il est possible de déterminer des cartes de valeurs optimales et des cartes valeurs de confiance associées uniquement pour la couche basse 30 (modèle d'aérosols) et pour la couche intermédiaire 31 (modèle de nuages).

Dans des modes préférés de mise en oeuvre, et tel qu'illustré par la figure 3, le procédé 50 de traitement d'image comporte en outre une étape 520 de filtrage spatial des cartes de valeurs optimales des paramètres. Avantageusement, le filtrage spatial d'une carte de valeurs optimales est effectué en fonction de la carte de valeurs de confiance associée.

La figure 5 représente schématiquement un mode préféré de mise en oeuvre, dans lequel l'étape 520 de filtrage spatial d'une carte de valeurs optimales comporte un calcul de cartes de valeurs optimales à résolution dégradée pour différentes valeurs de dégradation de résolution, en fonction de la carte de valeurs optimales et de la carte de valeurs de confiance associée, et un calcul d'une moyenne pondérée de la carte de valeurs optimale et des cartes de valeurs optimales à résolution dégradée.

En effet, dans l'exemple non limitatif illustré par la figure 5, diverses cartes de valeurs optimales (et de cartes de valeurs de confiance associées) à résolution dégradée sont calculées.

Plus particulièrement, l'exemple illustré par la figure 5 représente quatre dégradations de résolution successives par un facteur 2 (étapes S1, S2, S3 et S4 sur la figure 5), de sorte à obtenir des cartes de valeurs optimales (et de cartes de valeurs de confiance associées) à résolution dégradée par respectivement un facteur 2, 4, 8 et 16. Il est à noter qu'il est possible de considérer un nombre de dégradations de résolutions successives par un facteur 2 différent de quatre, et l'exemple illustré par la figure 5 n'est pas limité à un nombre particulier de dégradations de résolution successives. Par exemple, il est possible d'effectuer des dégradations de résolution successives par un facteur 2 jusqu'à obtenir une carte de valeurs optimales à résolution dégradée ne comportant qu'un seul pixel suivant une dimension.

Chaque dégradation de résolution est de préférence réalisée au moyen de filtres de convolution rapides qui calculent une moyenne pondérée des valeurs optimales selon les valeurs de confiance associées à des sous-résolutions spatiales successives qui correspondent à une dégradation de la résolution initiale par des facteurs 2 à 16.

La carte de valeurs optimales (et la carte de valeurs de confiance associées) obtenue à l'issue de l'étape S4 est ensuite soumise à une augmentation de résolution par un facteur 2 (étape S5). Une moyenne pondérée de la carte de valeurs optimales obtenue à l'issue de l'étape S3 et de la carte de valeurs optimales obtenue à l'issue de l'étape S5 est ensuite calculée (étape S6), au moyen de coefficients de pondération respectifs k et (1-k), k étant par exemple choisi égal à 0.5. Les cartes de valeurs de confiance associées sont combinées selon la même moyenne pondérée.

La carte de valeurs optimales (et la carte de valeurs de confiance associées) obtenue à l'issue de l'étape S6 est ensuite soumise à une augmentation de résolution par un facteur 2 (étape S7). Une moyenne pondérée de la carte de valeurs optimales obtenue à l'issue de l'étape S2 et de la carte de valeurs optimales obtenue à l'issue de l'étape S7 est ensuite calculée (étape S8), au moyen desdits coefficients de pondération k et (1-k). Les cartes de valeurs de confiance associées sont combinées selon la même moyenne pondérée.

La carte de valeurs optimales (et la carte de valeurs de confiance associées) obtenue à l'issue de l'étape S8 est ensuite soumise à une augmentation de résolution par un facteur 2 (étape S9). Une moyenne pondérée de la carte de valeurs optimales obtenue à l'issue de l'étape S1 et de la carte de valeurs optimales obtenue à l'issue de l'étape S9 est ensuite calculée (étape S10), au moyen desdits coefficients de pondération k et (1-k). Les cartes de valeurs de confiance associées sont combinées selon la même moyenne pondérée.

La carte de valeurs optimales (et la carte de valeurs de confiance associées) obtenue à l'issue de l'étape S10 est ensuite soumise à une augmentation de résolution par un facteur 2 (étape S11). Une moyenne pondérée de la carte de valeurs optimales initiale et de la carte de valeurs optimales obtenue à l'issue de l'étape S11 est ensuite calculée (étape S12), au moyen desdits coefficients de pondération k et (1-k). Les cartes de valeurs de confiance associées sont combinées selon la même moyenne pondérée.

La carte de valeurs optimales et la carte de valeurs de confiance associées obtenues à l'issue de l'étape S12 correspondent au résultat du filtrage spatial dans l'exemple illustré par la figure 5.

Dans des modes préférés de mise en oeuvre, le filtrage spatial de la carte de valeurs optimales de l'épaisseur optique de nuage ne concerne pas les pixels pour lesquels un critère prédéterminé d'opacité est vérifié. Par exemple, le critère d'opacité est vérifié si la valeur optimale de l'épaisseur optique de nuage est supérieure à une valeur seuil prédéterminée représentative de la présence d'un nuage opaque.

En effet, le filtrage spatial, qui est un filtre passe-bas, a tendance à adoucir les transitions rapides de la carte de valeurs optimales et permet donc de supprimer des artefacts liées par exemple à du bruit. Toutefois, un tel filtrage spatial contribuerait également à adoucir une délimitation d'un nuage épais, ce qui contribuerait à étaler cette délimitation sur des pixels voisins du nuage épais. C'est pourquoi il est avantageux de ne pas effectuer de filtrage spatial sur les valeurs optimales correspondant à un nuage épais. Par exemple, il est possible d'identifier les pixels, dits « pixels masqués », pour lesquels le critère d'opacité est vérifié. Pour ces pixels masqués, la carte de valeurs de confiance initiale est par exemple modifiée pour forcer les valeurs de confiance associées aux pixels masqués à zéro. La carte de valeurs de confiance ainsi modifiée est utilisée au cours de l'étape 520 de filtrage spatial. A l'issue de l'étape 520 de filtrage spatial, les valeurs optimales des pixels masqués et les valeurs de confiance associées sont par exemple remplacées par leurs valeurs initiales, avant filtrage spatial.

C) Détermination de paramètres de correction pour chaque couche

Tel qu'indiqué ci-dessus, le procédé 50 de traitement d'image comporte une étape 53 de détermination de valeurs de paramètres de correction pour chaque couche du modèle atmosphérique en fonction des valeurs optimales des paramètres du modèle atmosphérique.

De manière générale, les paramètres de correction d'une couche du modèle atmosphérique correspondent à des paramètres décrivant la fonction de transfert de cette couche, et qui peuvent par conséquent être utilisés pour inverser cette fonction de transfert et corriger les effets de la couche correspondante du modèle de transfert dans l'image.

Dans des modes préférés de mise en oeuvre, les paramètres de correction considérés sont par exemple, pour chaque couche (couche basse 30, couche intermédiaire 31 et couche haute 32) :

- une réflectance intrinsèque $\rho_l$ de la couche considérée,
- une atténuation intrinsèque $\tau_l$ de la couche considérée, qui correspond à l'atténuation introduite par la couche considérée sur le rayonnement reçu d'une couche immédiatement inférieure ou, dans le cas de la couche basse 30, reçu de la scène,
- une proportion d'effet environnement $xenv_l$ dans la transmission de la couche considérée.

La proportion d'effet d'environnement $xenv_l$ correspond à la contribution de l'environnement du point observé dans le rayonnement transmis à la couche supérieure, et peut s'exprimer de manière conventionnelle selon l'expression suivante :

$$xenv_l = \frac{\tau_{do}}{\tau_{oo} + \tau_{do}}$$

expression dans laquelle :

- $\tau_{oo}$ représente la transmission directe de rayonnement par la couche considérée, c'est-à-dire le coefficient de transmission du rayonnement qui provient effectivement du point observé au sol selon la ligne de visée considérée, par traversée (sans interception) de la couche considérée,
- $\tau_{do}$ représente la transmission indirecte de rayonnement par la couche considérée, c'est-à-dire le coefficient de transmission du rayonnement collecté selon la ligne de visée considérée qui provient de l'ensemble du voisinage du point observé au sol, par diffusion au passage de la couche considérée.

Rien n'exclut cependant de considérer d'autres types de paramètres de correction et le choix d'un type particulier de paramètre de correction ne constitue qu'une variante d'implémentation de l'invention.

Les valeurs de tels paramètres de correction peuvent être calculées, pour chaque couche, directement à partir du modèle atmosphérique en considérant les valeurs optimales déterminées pour les différents paramètres du modèle atmosphérique. L'étape 53 de détermination des valeurs des paramètres de correction et l'étape 52 de détermination des valeurs optimales peuvent donc être exécutées simultanément.

Ainsi, dans l'exemple précédent, l'étape 53 de détermination de valeurs de paramètres de correction doit permettre de déterminer, pour chaque pixel (et, le cas échéant, pour chaque image élémentaire, c'est-à-dire pour chaque bande de longueurs d'ondes considérée) :

- trois valeurs de réflectance intrinsèque $\rho_l$ (une valeur par couche du modèle atmosphérique),
- trois valeurs d'atténuation intrinsèque $\tau_l$ (une valeur par couche du modèle atmosphérique),
- trois valeurs de proportion d'effet d'environnement $xenv_l$ (une valeur par couche du modèle atmosphérique).

Tel qu'indiqué précédemment, la valeur optimale de l'altitude plancher de la colonne atmosphérique du modèle de ciel est sensiblement la même pour tous les pixels de l'image, de sorte que les valeurs des paramètres de correction pour la couche haute 32 sont en principe également sensiblement les mêmes pour tous les pixels de l'image.

Afin de limiter la quantité de données à mémoriser, il est avantageux de mémoriser des tables de correction associées respectivement à chaque paramètre du modèle atmosphérique et à chaque bande de longueurs d'ondes considérée. Par exemple, cela revient à déterminer, pour chaque bande de longueurs d'ondes considérée :

- une table de correction selon la distance de visibilité,
- une table de correction selon l'épaisseur optique de nuage,
- une table de correction selon l'altitude plancher de la colonne atmosphérique.

Une telle table de correction comporte, pour une ou plusieurs valeurs typiques du paramètre de modèle considéré (distance de visibilité, épaisseur optique de nuage, altitude plancher de la colonne atmosphérique), les valeurs correspondantes des paramètres de correction (réflectance intrinsèque, atténuation intrinsèque, proportion d'effet d'environnement). La table ci-dessous donne un exemple non limitatif d'une telle table de correction.

| Valeurs typiques du paramètre de modèle | 3 | 7 | 10 | [...] | 200 |
|---|---|---|---|---|---|
| Réflectance intrinsèque $\rho_l$ | [...] | [...] | [...] | [...] | [...] |
| Atténuation intrinsèque $\tau_l$ | [...] | [...] | [...] | [...] | [...] |
| Proportion d'effet d'environnement $xenv_l$ | [...] | [...] | [...] | [...] | [...] |

Tel qu'indiqué précédemment, la valeur optimale de l'altitude plancher de la colonne atmosphérique est sensiblement la même pour tous les pixels de l'image, de sorte que la table de correction correspondante peut ne comporter qu'une seule valeur typique égale à la valeur optimale.

Ainsi, pour récupérer les valeurs des paramètres de correction à utiliser pour un pixel de l'image, par exemple pour la couche basse 30 du modèle atmosphérique, il suffit d'obtenir la valeur optimale de la distance de visibilité (pour la bande de longueurs d'ondes de l'image considérée). Cette valeur optimale permet par exemple d'identifier, dans la table de correction associée à la distance de visibilité (et associée à la bande de longueurs d'ondes considérée), les valeurs typiques les plus proches de ladite valeur optimale déterminée ainsi que les valeurs des paramètres de correction associées, et de calculer les valeurs finales des paramètres de correction par interpolation desdites valeurs des paramètres de correction fournies par la table de correction associée à la distance de visibilité.

D) Conversion de l'image en image au sol avec effets d'environnement

Le procédé 50 de traitement d'image comporte également une étape 54 de conversion de l'image en image au sol avec effets d'environnement en fonction de valeurs des paramètres de correction. L'étape 54 de conversion en image au sol avec effets d'environnement vise à corriger les effets liés à la présence d'aérosols et/ou de nuages, à l'exception des effets d'environnement.

Plus particulièrement, l'étape 54 de conversion en image au sol avec effets d'environnement corrige successivement les effets de chaque couche du modèle atmosphérique, en considérant lesdites couches successivement par altitudes décroissantes. En d'autres termes, les effets de la couche haute 32 sont corrigés en premier, les effets de la couche intermédiaire 31 sont corrigés en second, et les effets de la couche basse sont corrigés en dernier.

Ainsi, pour un pixel donné, et en se plaçant après obtention de valeurs de réflectance en sommet d'atmosphère, désignée ci-après par $\rho_{TOA}$, on obtient successivement :

- une valeur de réflectance $\rho_1$ qui correspond à la réflectance au sommet de la couche intermédiaire 31,
- une valeur de réflectance $\rho_2$ qui correspond à la réflectance au sommet de la couche basse 30,
- une valeur de réflectance $\rho_3$ qui correspond à la réflectance au sol avec effets d'environnement.

Pour chaque couche du modèle atmosphérique, la correction s'effectue en fonction des valeurs des paramètres de correction, et vise notamment à supprimer la réflectance intrinsèque de la couche considérée et à compenser l'atténuation intrinsèque de ladite couche considérée, par exemple selon l'expression suivante :

$$\rho_{K+1} = g_l \times (\rho_K - \rho_l)$$

expression dans laquelle $a \le K \le 2$ et $g_l$ est un gain qui compense l'atténuation intrinsèque de la couche considérée ($g_l = 1/\tau_l$).

Tel qu'indiqué précédemment, les valeurs des paramètres de correction $\rho_l$ et $\tau_l$ dépendent du paramètre de modèle considéré (distance de visibilité, épaisseur optique de nuage) et de la valeur optimale dudit paramètre de modèle considéré au niveau du pixel considéré (et sont fonction de la bande de longueurs d'ondes considérée). Pour l'altitude plancher de la colonne atmosphérique, la valeur optimale est essentiellement la même quel que soit le pixel considéré, et la correction est essentiellement la même pour tous les pixels de l'image (et fonction de la bande de longueurs d'ondes considérée).

E) Conversion en image au sol sans effets d'environnement

Le procédé 50 de traitement d'image comporte également une étape 55 de conversion de l'image au sol avec effets d'environnement en image au sol sans effets d'environnement en fonction des valeurs des paramètres de correction. L'étape 55 de conversion en image au sol sans effets d'environnement vise donc à corriger les effets d'environnement.

Plus particulièrement, l'étape 55 de conversion en image au sol sans effets d'environnement corrige successivement les effets de chaque couche du modèle atmosphérique, en considérant lesdites couches successivement par altitudes décroissantes. En d'autres termes, les effets de la couche haute 32 sont corrigés en premier, les effets de la couche intermédiaire 31 sont corrigés en second, et les effets de la couche basse sont corrigés en dernier.

Ainsi, pour un pixel donné, et en se plaçant après obtention de valeurs de réflectance au sol avec effets d'environnement, désignée ci-après par $\rho_{3,0}$ (et qui correspond à la réflectance $\rho_3$ calculée ci-dessus), on obtient successivement :

- une valeur de réflectance $\rho_{3,1}$ qui correspond à la réflectance après correction de l'effet d'environnement de la couche haute 32,
- une valeur de réflectance $\rho_{3,2}$ qui correspond à la réflectance après correction de l'effet d'environnement de la couche haute 32 et de la couche intermédiaire 31,

- une valeur de réflectance $\rho_{3,3}$ qui correspond à la réflectance au sol sans effets d'environnement.

Pour chaque couche du modèle atmosphérique, la correction s'effectue en fonction des valeurs des paramètres de correction, et vise à supprimer en tout ou partie les contributions de l'environnement, par exemple selon l'expression suivante :

$$\rho_{3,K+1} = \frac{\rho_{3,K} - xenv_l \times f^{Background}\left(\rho_{3,K}\right)}{1 - xenv_l}$$

expression dans laquelle $0 \leq K \leq 2$ et $f^{Background}(\rho_{3,K})$ correspond à une réflectance reçue dans un cône de vue dont le sommet se trouve sur la ligne de visée du pixel considéré, c'est-à-dire sur la droite qui relie l'instrument de mesure 11 à la portion de la scène représentée par le pixel considéré. L'altitude du sommet du cône de vue dépend de la couche considérée. L'altitude du sommet du cône de vue est par exemple choisie comme étant une altitude moyenne des effets de diffusion dans la couche considérée. Cette altitude moyenne est par exemple d'environ 8 kilomètres pour la couche haute 32, 3.5 kilomètres pour la couche intermédiaire 31 et 800 mètres pour la couche basse 30. En positionnant de la sorte le sommet du cône de vue, à une altitude qui dépend de la couche considérée, les contributions des pixels voisins au pixel considéré, dans la réflectance reçue dans le cône de vue, dépendent de l'altitude du sommet dudit cône de vue, et dépendent donc de ladite couche considérée.

La figure 6 illustre un exemple de calcul de la réflectance reçue dans un cône de vue. Dans la figure 6, on considère de manière non limitative, à des fins de clarté de la figure, que la ligne de visée $Lv[l]$ du pixel considéré est verticale. Le sommet du cône de vue est positionné à une altitude $h_K$ qui, tel qu'indiqué précédemment, dépend de la couche considérée. Chaque pixel représente une portion prédéterminée de la scène observée, et les différentes portions représentées ont sensiblement toutes sensiblement les mêmes dimensions, et donc sensiblement la même superficie désignée par $Sp$ sur la figure 6. Par contre, la valeur de l'angle solide, formé au sommet du cône de vue pour observer une portion de la scène depuis ledit sommet, dépend de la portion considérée de la scène et de l'altitude $h_K$ du sommet du cône de vue.

Plus particulièrement, la valeur de l'angle solide au sommet du cône de vue est maximale pour la portion observée sous incidence normale, qui correspond à la portion située à l'extrémité de la ligne de visée $Lv[l]$ du pixel considéré dans la figure 6. Pour les portions de la scène qui ne sont pas observées sous incidence normale, la valeur de l'angle solide au sommet du cône de vue diminue avec la distance entre la portion considérée et la portion observée sous incidence normale. En outre, pour une même portion de la scène, la valeur de l'angle solide au sommet du cône de vue diminue lorsque l'altitude $h_K$ du sommet augmente.

Dans l'exemple illustré par la figure 6, la réflectance de la portion de la scène représentée par le pixel considéré est désignée par $\rho_{3,K}[l]$ et la valeur correspondante de l'angle solide au sommet du cône de vue est désignée par $\alpha_K[l]$. La figure 6 représente également la réflectance d'une portion de la scène distincte de la portion observée sous incidence normale, qui est désignée par $\rho_{3,K}[q]$ et dont la valeur correspondante de l'angle solide au sommet du cône de vue est désignée par $\alpha_K[q]$, qui est telle que $\alpha_K[q] < \alpha_K[l]$.

Par exemple, dans l'exemple illustré par la figure 6, la réflectance reçue dans le cône de vue peut être calculée selon l'expression suivante :

$$f^{Background}\left(\rho_{3,K}[l]\right) = R_K[l] \sum_{n=1}^{Np} \rho_{3,K}[n] \cdot \alpha_K[n]$$

expression dans laquelle :

- $Np$ correspond au nombre de pixels considérés pour le calcul, qui est par exemple égal au nombre total de pixels de l'image au sol avec effets d'environnement,
- $R_K[l]$ correspond à un coefficient de normalisation, qui est par exemple calculé selon l'expression suivante :

$$R_K[l] = \frac{1}{\sum_{n=1}^{Np} \alpha_K[n]}$$

La réflectance reçue dans le cône de vue est calculée à partir des valeurs de réflectance calculées à l'itération précédente (successivement à partir des réflectances $\rho_{3,0}$, $\rho_{3,1}$ et $\rho_{3,2}$). Ladite réflectance reçue dans le cône de vue peut être calculée par exemple au moyen de filtres de convolution rapide et de techniques pyramidales (par dégradations successives de la résolution) similaires à ce qui a été décrit précédemment pour le filtrage spatial.

Dans l'expression ci-dessus, $xenv_l \times f^{Background}(\rho_{3,K})$ correspond à la contribution de l'environnement du pixel. Tel qu'indiqué précédemment, la valeur de la proportion d'effet d'environnement $xenv_l$ dépend du paramètre de modèle considéré (distance de visibilité, épaisseur optique de nuage) et de la valeur optimale dudit paramètre de modèle considéré au niveau du pixel considéré (et fonction de la bande de longueurs d'ondes considérée). Pour l'altitude plancher de la colonne atmosphérique du modèle de ciel, la valeur optimale est essentiellement la même quel que soit le pixel considéré, et la correction est essentiellement la même pour tous les pixels (et fonction de la bande de longueurs d'ondes considérée).

Les valeurs de réflectance $\rho_{3,3}$ obtenues à l'issue des corrections décrites ci-dessus forment l'image au sol sans effets d'environnement.

F) Autres variantes du procédé de traitement d'image

De manière plus générale, il est à noter que les modes de mise en oeuvre considérés ci-dessus ont été décrits à titre d'exemples non limitatifs, et que d'autres variantes sont par conséquent envisageables.

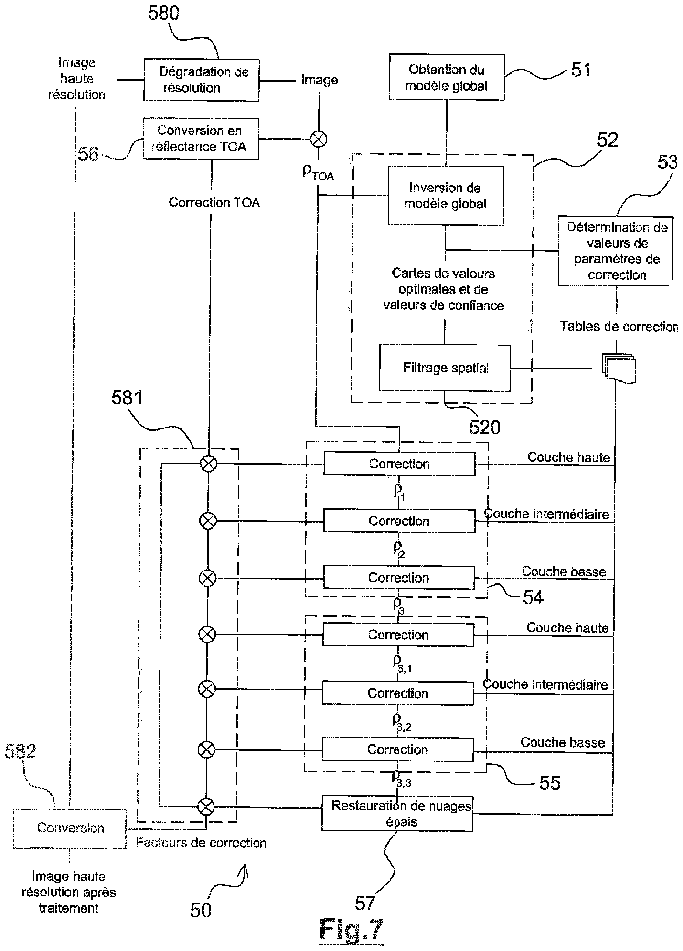

La figure 7 représente un exemple non limitatif de variante de mise en oeuvre du procédé 50 de traitement d'image de la figure 3.

Outre les étapes déjà décrites en référence à la figure 3, le procédé 50 de traitement d'image comporte par exemple une étape 57 au cours de laquelle la valeur de chaque pixel masqué est forcée, dans l'image au sol sans effets d'environnement, à une valeur prédéterminée.

En effet, tel qu'indiqué précédemment, en cas de présence d'un nuage épais, il ne sert à rien d'essayer de restituer la réflectance au sol car le sol est masqué par ledit nuage épais. La valeur prédéterminée correspond par exemple à la valeur du pixel masqué dans l'image après conversion en valeur en sommet de nuage ($\rho_1$) ou en valeur en sommet d'atmosphère ($\rho_{TOA}$).

En outre, dans l'exemple illustré par la figure 7, le procédé 50 de traitement d'image comporte une étape 580 de dégradation de résolution d'une image haute résolution selon une méthode conventionnelle de rééchantillonnage image. Par « haute résolution » on entend simplement ici que la résolution est haute par rapport à celle de l'image qui est ensuite utilisée pour exécuter les différentes étapes décrites en référence aux figures 2 et 3.

Avantageusement, le procédé 50 de traitement d'image comporte en outre une étape 581 de détermination de facteurs de correction à appliquer à l'image pour obtenir l'image au sol sans effets d'environnement, et une étape 582 de conversion de l'image haute résolution en une image haute résolution au sol sans effets d'environnement en fonction desdits facteurs de correction. Par exemple, l'étape 582 de conversion en image haute résolution au sol sans effets d'environnement comporte une interpolation des facteurs de correction pour les ramener à la même résolution que celle de l'image haute résolution et une application des facteurs de correction interpolés sur l'image initiale haute résolution.

Le présent procédé de traitement peut être exécuté de manière automatisée sans intervention d'un opérateur à quelque étape que ce soit. Le présent procédé de traitement peut-être mis en oeuvre de manière non limitative, en fonction du contexte opérationnel, au sein d'une station sol 20 de réception directe d'images satellites, au sein d'une suite logicielle autonome dédiée au traitement d'images satellites ou aériennes, ou encore être intégré dans une chaîne de traitements distribués pour des services de traitement d'image de type « cloud services ».

Dans des modes particuliers de mise en oeuvre, le procédé 50 de traitement comporte une étape préalable (non représentée sur les figures) de détermination si l'image comporte un nuage. Cette étape peut être mise en oeuvre selon toute méthode de qualification d'image connue de l'homme du métier. S'il est déterminé que l'image ne comporte pas de nuage, alors les étapes ci-dessus sont exécutées en considérant un modèle atmosphérique dépourvu de modèle de nuages. Dans le cas contraire, les étapes ci-dessus sont exécutées en considérant le modèle atmosphérique décrit ci-dessus, comportant au moins un modèle d'aérosols et un modèle de nuages.

**Revendications**

1. Procédé (50) de traitement d'une image optique acquise par un engin (10) spatial ou aérien, ladite image représentant un rayonnement dans au moins une bande de longueurs d'ondes reçu d'une scène à la surface de la Terre, **caractérisé en ce qu'**il comporte :

   - une obtention (51) d'un modèle de réflectance au sol et d'un modèle atmosphérique, ledit modèle atmosphérique comportant au moins deux couches modélisant les effets de l'atmosphère dans des altitudes respectives différentes, dont une couche correspondant à un modèle d'aérosols et une couche correspondant à un modèle de nuages,

- une détermination (52) de valeurs optimales de paramètres du modèle de réflectance au sol et de paramètres du modèle atmosphérique permettant d'optimiser ledit modèle de réflectance au sol et ledit modèle atmosphérique par rapport à l'image,

- une détermination (53), pour chaque couche du modèle atmosphérique, de valeurs de paramètres de correction en fonction des valeurs optimales des paramètres du modèle atmosphérique,

- une conversion (54) de l'image en une image au sol avec effets d'environnement en fonction des valeurs des paramètres de correction de chaque couche du modèle atmosphérique, dans laquelle les effets liés à la présence d'aérosols et/ou de nuages de chaque couche du modèle atmosphérique sont corrigés successivement,

- une conversion (55) de l'image au sol avec effets d'environnement en image au sol sans effets d'environnement en fonction des valeurs des paramètres de correction de chaque couche du modèle atmosphérique, dans laquelle les effets d'environnement de chaque couche du modèle atmosphérique sont corrigés successivement.

2. Procédé (50) selon la revendication 1, dans lequel les paramètres de correction comportent des réflectances intrinsèques et des atténuations intrinsèques pour chaque couche du modèle atmosphérique, et la conversion en image au sol avec effets d'environnement comporte une correction des réflectances intrinsèques et des atténuations intrinsèques des différentes couches du modèle atmosphérique.

3. Procédé (50) selon l'une des revendications 1 à 2, dans lequel les paramètres de correction comportent des proportions d'effet d'environnement pour chaque couche du modèle atmosphérique, et la conversion en image au sol sans effets d'environnement comporte une correction de contributions d'environnement introduites par les différentes couches en fonction des proportions d'effet d'environnement.

4. Procédé (50) selon la revendication 3, dans lequel la correction d'une contribution d'environnement en un pixel pour une couche comporte :

- un calcul d'une réflectance reçue dans un cône de vue dont le sommet correspond au pixel considéré,
- une suppression de ladite réflectance reçue dans le cône de vue, pondérée par la proportion d'effet d'environnement pour la couche considérée et le pixel considéré.

5. Procédé (50) selon l'une des revendications précédentes, comportant une identification de pixels de l'image pour lesquels un critère d'opacité de la couche du modèle de nuages est vérifié, dits « pixels masqués », et dans lequel la valeur de chaque pixel masqué est forcée (57), dans l'image au sol sans effets d'environnement, à une valeur prédéterminée.

6. Procédé (50) selon la revendication 5, dans lequel la valeur prédéterminée correspond à la valeur du pixel masqué dans l'image après conversion en valeur en sommet de nuage ou en valeur en sommet d'atmosphère.

7. Procédé (50) selon l'une des revendications précédentes, dans lequel la détermination (52) de valeurs optimales de paramètres du modèle atmosphérique comporte une détermination, pour chaque paramètre, d'une carte de valeurs optimales dudit paramètre associées respectivement à différents pixels de l'image, et un filtrage spatial (520) de ladite carte de valeurs optimales dudit paramètre.

8. Procédé (50) selon la revendication 7, dans lequel, pour chaque paramètre, la détermination d'une carte de valeurs optimales dudit paramètre comporte en outre une détermination d'une carte de valeurs de confiance associées auxdites valeurs optimales, et le filtrage spatial (520) d'une carte de valeurs optimales est effectué en fonction de la carte de valeurs de confiance associée.

9. Procédé (50) selon la revendication 8, dans lequel le filtrage spatial (520) d'une carte de valeurs optimales comporte un calcul de cartes de valeurs optimales à résolution dégradée pour différentes valeurs de dégradation de résolution, en fonction de la carte de valeurs optimales et de la carte de valeurs de confiance associée, et un calcul d'une moyenne pondérée de la carte de valeurs optimale et des cartes de valeurs optimales à résolution dégradée.

10. Procédé (50) selon l'une des revendications précédentes, dans lequel l'image correspond à une image brute dont les valeurs des pixels ont été converties en valeurs en sommet d'atmosphère.

**11.** Procédé (50) selon l'une des revendications précédentes, dans lequel l'image correspond à une image haute résolution dont la résolution a été dégradée, comportant une détermination (581) de facteurs de correction à appliquer à l'image pour obtenir l'image au sol sans effets d'environnement, et une conversion (582) de l'image haute résolution en une image haute résolution au sol sans effets d'environnement en fonction desdits facteurs de correction.

**12.** Procédé (50) selon l'une des revendications précédentes, dans lequel le modèle atmosphérique comporte en outre un modèle de ciel modélisant les effets de l'atmosphère dans une couche d'altitude supérieure à la couche du modèle de nuages.

**13.** Procédé (50) selon l'une des revendications précédentes, comportant une étape préalable de détermination si l'image comporte un nuage, un modèle atmosphérique sans modèle de nuages étant utilisé lorsqu'il est déterminé que l'image ne comporte pas de nuage.

**14.** Produit programme d'ordinateur **caractérisé en ce qu'**il comporte un ensemble d'instructions de code de programme qui, lorsqu'elles sont exécutées par un processeur, configurent ledit processeur pour mettre en oeuvre un procédé (50) de traitement d'image selon l'une des revendications précédentes.

**15.** Dispositif de traitement d'image acquise par un engin (10) spatial ou aérien, **caractérisé en ce qu'**il comporte des moyens configurés pour mettre en oeuvre un procédé (50) de traitement d'image selon l'une des revendications 1 à 13.

**Patentansprüche**

**1.** Verfahren (50) zur Verarbeitung einer optischen Abbildung, die von einem Raum- oder Luftfahrzeug (10) erfasst wurde, wobei die Abbildung Strahlung in mindestens einem Wellenlängenband darstellt, die von einem Ausschnitt auf der Erdoberfläche empfangen wurde, **dadurch gekennzeichnet, dass** es enthält:

- ein Erlangen (51) eines Bodenreflexionsmodells und eines Atmosphärenmodells, wobei das Atmosphärenmodell mindestens zwei Schichten enthält, die die Einwirkungen der Atmosphäre in jeweils verschiedenen Höhen modellieren, darunter eine Schicht, die einem Aerosolmodell entspricht, und eine Schicht, die einem Wolkenmodell entspricht,
- eine Bestimmung (52) optimaler Werte der Parameter des Bodenreflexionsmodells und der Parameter des Atmosphärenmodells, die die Optimierung des Bodenreflexionsmodells und des Atmosphärenmodells in Bezug auf die Abbildung ermöglichen,
- eine Bestimmung (53), für jede Schicht des Atmosphärenmodells, von Werten der Korrekturparameter in Abhängigkeit von den optimalen Werten der Parameter des Atmosphärenmodells,
- eine Umwandlung (54) der Abbildung in eine Bodenabbildung mit Umwelteinwirkungen in Abhängigkeit von den Werten der Korrekturparameter jeder Schicht des Atmosphärenmodells, wobei die Einwirkungen im Zusammenhang mit dem Vorhandensein von Aerosolen und/oder Wolken jeder Schicht des Atmosphärenmodells nacheinander korrigiert werden,
- eine Umwandlung (55) der Bodenabbildung mit Umwelteinwirkungen in eine Bodenabbildung ohne Umwelteinwirkungen in Abhängigkeit von den Werten der Korrekturparameter jeder Schicht des Atmosphärenmodells, wobei die Umwelteinwirkungen jeder Schicht des Atmosphärenmodells nacheinander korrigiert werden.

**2.** Verfahren (50) nach Anspruch 1, wobei die Korrekturparameter intrinsische Reflexionen und intrinsische Abschwächungen für jede Schicht des Atmosphärenmodells enthalten, und die Umwandlung in eine Bodenabbildung mit Umwelteinwirkungen eine Korrektur der intrinsischen Reflexionen und intrinsischen Abschwächungen der verschiedenen Schichten des Atmosphärenmodells enthält.

**3.** Verfahren (50) nach einem der Ansprüche 1 bis 2, wobei die Korrekturparameter Umwelteinwirkungsanteile für jede Schicht des Atmosphärenmodells enthalten, und die Umwandlung in eine Bodenabbildung ohne Umwelteinwirkungen eine Korrektur von Umweltbeiträgen enthält, die von den verschiedenen Schichten in Abhängigkeit von den Umwelteinwirkungsanteilen eingeführt werden.

**4.** Verfahren (50) nach Anspruch 3, wobei die Korrektur eines Umweltbeitrags in einem Pixel für eine Schicht enthält:

- eine Berechnung einer Reflexion, die im Beobachtungswinkelbereich empfangen wurde, deren Scheitelpunkt dem betrachteten Pixel entspricht,
- eine Unterdrückung der Reflexion, die im Beobachtungswinkelbereich empfangen wurde, gewichtet durch den Anteil der Umwelteinwirkung für die betrachtete Schicht und das betrachtete Pixel.

5. Verfahren (50) nach einem der vorhergehenden Ansprüche, eine Identifizierung von Pixeln der Abbildung enthaltend, für die ein Kriterium für die Opazität der Schicht des Wolkenmodells verifiziert wird, "verborgene Pixel" genannt, und wobei der Wert jedes verborgenen Pixels, in der Bodenabbildung ohne Umwelteinwirkungen, auf einen vorbestimmten Wert erzwungen (57) wird.

6. Verfahren (50) nach Anspruch 5, wobei der vorbestimmte Wert dem Wert des verborgenen Pixels in der Abbildung entspricht nach der Umwandlung in einen Wert des Wolkenscheitelpunkts oder einen Wert des Atmosphärenscheitelpunkts.

7. Verfahren (50) nach einem der vorhergehenden Ansprüche, wobei die Bestimmung (52) optimaler Parameterwerte des Atmosphärenmodells eine Bestimmung enthält, für jeden Parameter, einer Karte optimaler Werte des Parameters, die jeweils verschiedenen Pixeln der Abbildung zugeordnet sind, und eine räumliche Filterung (520) der Karte optimaler Werte des Parameters.

8. Verfahren (50) nach Anspruch 7, wobei, für jeden Parameter, die Bestimmung einer Karte optimaler Werte des Parameters ferner eine Bestimmung einer Karte von Konfidenzwerten enthält, die den optimalen Werten zugeordnet sind, und die räumliche Filterung (520) einer Karte optimaler Werte in Abhängigkeit von der zugeordneten Karte von Konfidenzwerten erfolgt.

9. Verfahren (50) nach Anspruch 8, wobei die räumliche Filterung (520) einer Karte optimaler Werte eine Berechnung von Karten optimaler Werte mit verschlechterter Auflösung für verschiedene Verschlechterungswerte der Auflösung enthält in Abhängigkeit von der Karte optimaler Werte und der zugeordneten Konfidenzwertkarte, und eine Berechnung eines gewichteten Durchschnitts der Karte optimaler Werte und der Karten optimaler Werte mit verschlechterter Auflösung.

10. Verfahren (50) nach einem der vorhergehenden Ansprüche, wobei die Abbildung einer Rohabbildung entspricht, deren Pixelwerte in Werte des Atmosphärenscheitelpunkts umgewandelt wurden.

11. Verfahren (50) nach einem der vorhergehenden Ansprüche, wobei die Abbildung einer hochauflösenden Abbildung entspricht, deren Auflösung verschlechtert wurde, eine Bestimmung (581) von Korrekturfaktoren enthaltend, die auf die Abbildung anzuwenden sind, um die Bodenabbildung ohne Umwelteinwirkungen zu erlangen, und eine Umwandlung (582) der hochauflösenden Abbildung in eine hochauflösende Bodenabbildung ohne Umwelteinwirkungen in Abhängigkeit von den Korrekturfaktoren.

12. Verfahren (50) nach einem der vorhergehenden Ansprüche, wobei das Atmosphärenmodell ferner ein Himmelsmodell enthält, das die Einwirkungen der Atmosphäre in einer Schicht einer Höhenlage modelliert, die über der Schicht des Wolkenmodells liegt.

13. Verfahren (50) nach einem der vorhergehenden Ansprüche, einen vorangehenden Schritt der Bestimmung enthaltend, wenn die Abbildung eine Wolke enthält, wobei ein Atmosphärenmodell ohne Wolkenmodell verwendet wird, wenn bestimmt wurde, dass die Abbildung keine Wolke enthält.

14. Computerprogrammprodukt, **dadurch gekennzeichnet, dass** es eine Reihe von Programmcodebefehlen enthält, die, wenn sie von einem Prozessor ausgeführt werden, den Prozessor konfigurieren, um ein Verfahren (50) zur Abbildungsverarbeitung nach einem der vorhergehenden Ansprüche durchzuführen.

15. Vorrichtung zur Verarbeitung einer Abbildung, die von einem Raum- oder Luftfahrzeug (10) erfasst wurde, **dadurch gekennzeichnet, dass** sie Mittel enthält, die zur Durchführung eines Verfahrens der Abbildungsverarbeitung (50) nach einem der Ansprüche 1 bis 13 konfiguriert sind.

**Claims**

1. - Method (50) for processing an optical image acquired by a space vehicle or an aerial vehicle (10), said image representing a radiation in at least one band of wavelengths received from a scene on the surface of the Earth, **characterized in that** it comprises:

- obtaining (51) a ground reflectance model and an atmospheric model, said atmospheric model comprising at least two couches modeling the effects of the atmosphere in different respective altitudes, of which one layer corresponding to an aerosol model and a layer corresponding to a cloud model,
- determining (52) optimal parameter values of the ground reflectance model and of atmospheric model parameters making it possible to optimize said ground reflectance model and said atmospheric model with respect to the image,
- determining (53), for each layer of the atmospheric model, correction parameter values according to the optimal values of the atmospheric model,
- converting (54) the image into a ground image with environmental effects according to the correction parameter values of each layer of the atmospheric model, in which the effects related to the presence of aerosols and/or clouds in each layer of the atmospheric model are successively corrected,
- converting (55) the ground image with environmental effects into a ground image with no environmental effects according to the correction parameter values of each layer of the atmospheric model, in which the environmental effects of each layer of the atmospheric model are successively corrected.

2. - Method (50) according to claim 1, wherein the correction parameters comprise intrinsic reflectances and intrinsic attenuations for each layer of the atmospheric model, and the converting into a ground image with environmental effects comprises a correction of the intrinsic reflectances and of the intrinsic attenuations of the different layers of the atmospheric model.

3. - Method (50) according to one of claims 1 to 2, wherein the correction parameters comprise proportions of environmental effects for each layer of the atmospheric model, and the converting into a ground image with no environmental effects comprises a correction of the environmental contributions introduced by the different layers according to proportions of environmental effects.

4. - Method (50) according to claim 3, wherein the correcting of an environmental contribution into one pixel for a layer comprises:

- calculating a reflectance received in a view cone of which the apex corresponds to the pixel considered,
- suppressing of said reflectance received in the view cone, weighted by the proportion of environmental effects for the layer considered and the pixel considered.

5. - Method (50) according to one of the preceding claims, comprising an identification of pixels of the image for which a criterion of opacity of the cloud model is verified, referred to as "masked pixels", and wherein the value of each masked pixel is forced (57), in the ground image with no environmental effects, to a predetermined value.

6. - Method (50) according to claim 5, wherein the predetermined value corresponds to the value of the masked pixel in the image after conversion into a value at the cloud top or into a value at the top of the atmosphere.

7. - Method (50) according to one of the preceding claims, wherein the determining (52) of optimal values of atmospheric model parameters comprises a determining, for each parameter, a map of optimal values of said parameter associated respectively with different pixels of the image, and a spatial filtering (520) of said map of optimal values of said parameter.

8. - Method (50) according to claim 7, wherein, for each parameter, the determining of a map of optimal values of said parameter further comprises a determining of a map of confidence values associated with said optimal values, and the spatial filtering (520) of a map of optimal values is carried out according to the associated map of confidence values.

9. - Method (50) according to claim 8, wherein the spatial filtering (520) of a map of optimal values comprises a calculation of maps of optimal values at a degraded resolution for different values of resolution degradation, according to the map of optimal values and the associated map of confidence values, and a calculation of a weighted average of the map of optimal values and of the maps of optimal values with a degraded resolution.

10. - Method (50) according to one of the preceding claims, wherein the image corresponds to a raw image of which the values of the pixels have been converted into top-of-the-atmosphere values.

**11.** - Method (50) according to one of the preceding claims, wherein the image corresponds to a high-resolution image of which the resolution has been degraded, comprising a determining (581) of the correction factors to be applied to the image in order to obtain the ground image with no environmental effects, and a converting (582) of the high-resolution image into a high-resolution ground image with no environmental effects according to said correction factors.

**12.** - Method (50) according to one of the preceding claims, wherein the atmospheric model further comprises a sky model modeling the effects of the atmosphere in a layer of altitude greater than the layer of the cloud model.

**13.** - Method (50) according to one of the preceding claims, comprising a prior step of determining if the image comprises a cloud, with an atmospheric model without a cloud model being used when it is determined that the image does not contain a cloud.

**14.** - Computer program product **characterized in that** it comprises a set of program code instructions that, when they are executed by a processor, configure said processor to implement a method (50) for processing an image according to one of the preceding claims.

**15.** - Device for processing an image acquired by a space vehicle or an aerial vehicle (10), **characterized in that** it comprises means configured to implement a method (50) for processing an image according to one of claims 1 to 13.

## Fig.1

Image

Obtention de modèle de réflectance au sol et de modèle atmosphérique — 51

50

Détermination de valeurs optimales de paramètres du modèle atmosphérique — 52

Détermination de valeurs de paramètres de correction — 53

Conversion en image au sol avec effet de contiguïté — 54

Conversion en image au sol sans effet de contiguïté — 55

## Fig.2

**Fig.3**

Altitude

Modèle de ciel

Couche
haute 32

~4km

Modèle de nuages

Couche
intermédiaire 31

~2km

Modèle d'aérosols

Couche
basse 30

0km

**Fig.4**

S5

S4

S6 ⊗ 1-k

S7

k

S3

S8 ⊗ 1-k

S9

k

S2

S10 ⊗ 1-k

S11

k

S1

S12 ⊗ 1-k

k

**Fig.5**

$Lv[l]$

$\alpha_K[q]$

$\alpha_K[l]$

$h_K$

... ...

Sp

$\rho_{3,K}[l]$

Sp

Sp

$\rho_{3,K}[q]$ Sp

Sp

**Fig.6**

580

| Image haute résolution | Dégradation de résolution | Image |

Obtention du modèle global — 51

Conversion en réflectance TOA

56

$\rho_{TOA}$

Inversion de modèle global — 52

53

Détermination de valeurs de paramètres de correction

Correction TOA

Cartes de valeurs optimales et de valeurs de confiance

Filtrage spatial

Tables de correction

520

581

Correction — Couche haute

$\rho_1$

Correction — Couche intermédiaire

$\rho_2$

Correction — Couche basse

$\rho_3$ — 54

Correction — Couche haute

$\rho_{3,1}$

Correction — Couche intermédiaire

$\rho_{3,2}$

Correction — Couche basse

$\rho_{3,3}$ — 55

582

Conversion

Facteurs de correction

Image haute résolution après traitement

50

Restauration de nuages épais

57

**Fig.7**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 2014197021 A

**Littérature non-brevet citée dans la description**

- **HASSAN OUAIDRARI et al.** Operational Atmospheric Correction of Landsat TM Data. *Remote Sensing of Environment,* vol. 70 (1), 4-15
- Correction of atmospheric and topographie effects for high spatial resolution satellite imagery. *International Journal of Remote Sensing,* vol. 18 (5), 1099-1111
- A Multi-Temporal and Multi-Spectral Method to Estimate Aérosol Optical Thickness over Land, for the Atmospheric Correction of FormoSat-2, LandSat, VENμS and Sentinel-2 Images. *Remote Sensing,* vol. 7 (3), 2668-2691
- **JACQUEMOUD S. ; VERHOEF W. ; BARET W. ; BACOUR C. ; ZARCO-TEJADA P.J. ; ASNER G.P. ; FRANÇOIS C. ; USTIN, S.L.** PROSPECT + SAIL Models : A Review of Use for Végétation Characterization. *Remote Sensing of Environment,* vol. 113, S56-S66
- **KNEISYS F.X. et al.** Users Guide to LOWTRAN 7. *Air Force Geophysics Lab Hanscom AFB MA,* 1988